# EUROPÄISCHE PATENTSCHRIFT

(11) **EP 3 682 130 B1**
(45) Veröffentlichungstag und Bekanntmachung des Hinweises auf die Patenterteilung: **30.03.2022**
(21) Anmeldenummer: 18773930.5
(22) Anmeldetag: 12.09.2018
(51) Int. Cl.: F16D 7/02

(54) **DREHMOMENTBEGRENZER FÜR EINEN ANTRIEBSSTRANG**
TORQUE LIMITER FOR A DRIVE TRAIN
LIMITEUR DE COUPLE POUR CHAINE CINÉMATIQUE

(30) Priorität: 15.09.2017 DE 102017121431
(43) Veröffentlichungstag der Anmeldung: 22.07.2020
(73) Patentinhaber: Schaeffler Technologies AG & Co. KG, 91074 Herzogenaurach (DE)
(72) Erfinder: MINGAS, Constantin, 77815 Bühl (DE)
(86) Internationale Anmeldenummer: PCT/DE2018/100768
(87) Internationale Veröffentlichungsnummer: WO 2019/052602

(56) Entgegenhaltungen:
- DE-A1- 19 728 422
- US-A1- 2011 177 906
- US-A1- 2014 094 321

## Beschreibung

Die Erfindung betrifft einen Drehmomentbegrenzer gemäß Patentanspruch 1 für einen Antriebsstrang, insbesondere für einen Antriebsstrang eines Kraftfahrzeugs. Der Antriebsstrang ist insbesondere ein Antriebsstrang für ein Hybridfahrzeug. Der Antriebsstrang weist insbesondere eine erste Antriebseinheit (z. B. eine Verbrennungskraftmaschine) und eine zweite Antriebseinheit (z. B. eine elektrische Maschine) auf, die über den Drehmomentbegrenzer drehmomentübertragend verbindbar bzw. voneinander trennbar sind.

Der Drehmomentbegrenzer weist zumindest eine sich entlang einer axialen Richtung erstreckende Drehachse sowie eine Antriebsseite und eine Abtriebsseite auf, die über mindestens einen Reibbelag und unter einer in der axialen Richtung wirkenden Vorspannung zumindest bis zum Erreichen eines in einer Umfangsrichtung wirkenden Grenzdrehmoments miteinander drehmomentübertragend verbunden sind. Der mindestens eine Reibbelag ist (im Betrieb des Antriebsstrangs) bei Überschreiten des Grenzdrehmoments an einer, nur an einer von Antriebsseite und Abtriebsseite vorliegenden, ersten Reibfläche rutschend angeordnet und dabei mit einer, an der anderen von Antriebsseite und Abtriebsseite vorliegenden zweiten Reibfläche kraftschlüssig verbunden.

Derartige Drehmomentbegrenzer sind bekannt. Dabei wird, bei Überschreiten eines Grenzdrehmoments, an nur einer von zwei Reibflächen ein Rutschen der Reibbeläge ermöglicht. Auf der anderen Reibfläche wird ein Rutschen verhindert. Diese gezielte Fixierung einer der zwei Reibflächen an der Antriebsseite oder der Abtriebsseite ist erforderlich, um eine geringe Variation des Soll-Rutschmoments (bei Überschreiten des Grenzdrehmoments) sicherzustellen. Dafür wird auf der für das Rutschen vorgesehenen Reibfläche eine spezielle Materialpaarung vorgesehen.

Die Fixierung der Reibbeläge an einer von Antriebsseite und Abtriebsseite wird bei bekannten Drehmomentbegrenzern über in Umfangsrichtung formschlüssige Verbindungen zwischen Reibfläche und Reibbelag sichergestellt (z. B. durch Vernietung oder ineinander erstreckende Profilierungen). Alternativ wird der Reibbelag über eine Verklebung stoffschlüssig mit der Reibfläche verbunden.

Diese formschlüssige oder stoffschlüssige Fixierung des Reibbelags an einer der Reibflächen erfordert jedoch einen erhöhten Montage- bzw. Herstellungsaufwand und verursacht höhere Kosten.

Aus der US 2014/0094321 A1 ist ein Drehmomentbegrenzer bekannt, der auf den Oberbegriff des Patentanspruchs 1 lesbar ist.

Der vorliegenden Erfindung liegt die Aufgabe zugrunde, die in dem Stand der Technik entdeckten Nachteile zumindest teilweise zu überwinden und insbesondere einen Drehmomentbegrenzer bereitzustellen, bei dem die vorbestimmte einseitige Fixierung der Reibbelage anders realisiert wird.

Die Aufgabe wird durch die Merkmale des unabhängigen Patentanspruchs 1 gelöst. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung betrifft einen Drehmomentbegrenzer für einen Antriebsstrang, zumindest aufweisend eine sich entlang einer axialen Richtung erstreckende Drehachse sowie eine Antriebsseite und eine Abtriebsseite. Die Antriebsseite und die Abtriebsseite sind (im Betrieb des Drehmomentbegrenzers) über mindestens einen Reibbelag und unter einer in der axialen Richtung wirkenden Vorspannung zumindest bis zum Erreichen eines in einer Umfangsrichtung wirkenden Grenzdrehmoments miteinander drehmomentübertragend verbunden. Der mindestens eine Reibbelag ist bei Überschreiten des Grenzdrehmoments an einer, nur an einer von Antriebsseite und Abtriebsseite vorliegenden, ersten Reibfläche rutschend angeordnet. Dabei ist der mindestens eine Reibbelag mit einer, an der anderen von Antriebsseite und Abtriebsseite vorliegenden zweiten Reibfläche (weiterhin) kraftschlüssig verbunden. Der mindestens eine Reibbelag weist zumindest hin zu der ersten Reibfläche ein erstes Material mit einem ersten Reibwert und hin zu der zweiten Reibfläche ein zweites Material mit einem von dem ersten Reibwert unterschiedlichen zweiten Reibwert auf.

Die Ausgestaltung des Reibbelags mit unterschiedlichen Reibwerten ermöglicht ein vorbestimmtes Durchrutschen (also eine Verdrehung des Reibbelags gegenüber der Reibfläche in Umfangsrichtung) an einer (vorbestimmten) Reibfläche (nämlich immer an der ersten Reibfläche), während die andere (zweite) Reibfläche weiter kraftschlüssig mit dem Reibbelag verbunden ist (und also nicht durchrutscht).

Insbesondere besteht die erste Reibfläche aus einem Edelstahl.

Insbesondere ist der erste Reibwert kleiner ist als der zweite Reibwert. Bevorzugt ist der erste Reibwert um mindestens 1 %, insbesondere um mindestens 2 %, bevorzugt um mindestens 5 %, kleiner als der zweite Reibwert.

Der mindestens eine Reibbelag kann ein Verbundmaterial sein, das durch mindestens das erste Material und das zweite Material gebildet ist. Insbesondere können durch eine unterschiedliche Verteilung der Materialen innerhalb des Reibbelags voneinander unterschiedliche Reibwerte gebildet werden, so dass der Reibbelag hin zu der ersten Reibfläche den ersten Reibwert und hin zu der zweiten Reibfläche den von dem ersten Reibwert unterschiedlichen zweiten Reibwert aufweist.

Ein Verbundmaterial (auch als Verbundwerkstoff oder Kompositwerkstoff bezeichnet) ist insbesondere ein Werkstoff, der aus zwei oder mehr Materialien besteht, wobei das Verbundmaterial andere Werkstoffeigenschaften besitzt als seine einzelnen Materialien. Die Materialien sind nicht zerstörungsfrei voneinander trennbar.

Der mindestens eine Reibbelag kann mindestens zwei miteinander stoffschlüssig verbundene Lagen (zur Bildung eines sogenannten Dual-Layer) aufweisen, wobei eine erste Lage die erste Reibfläche und eine zweite Lage die zweite Reibfläche bildet. Insbesondere sind die Lagen fest miteinander verbunden, so dass eine relative Verlagerung der Lagen gegenüber einander im Betrieb des Drehmomentbegrenzers nicht erfolgt. Jede Lage kann durch ein vorstehend beschriebenes Verbundmaterial gebildet sein.

Der mindestens eine Reibbelag bildet bis zum Erreichen des Grenzdrehmoments mit der Antriebsseite und mit der Abtriebsseite zumindest gegenüber der Umfangsrichtung eine ausschließlich kraftschlüssige Verbindung aus. Es sind hier also gerade keine in Umfangsrichtung wirkende stoffschlüssige (z. B. durch Kleben) oder formschlüssige (z. B. durch ineinandergreifende Profilierungen oder Nieten) Verbindungen vorgesehen.

Insbesondere werden die Reibbeläge also zwischen der Antriebsseite und der Abtriebsseite bzw. zwischen den Reibflächen angeordnet und durch die Vorspannung einer Vorspannfeder gegenüber der Drehachse fixiert. Damit kann eine einfache Montage realisiert werden.

Der Drehmomentbegrenzer kann zumindest einen ersten Reibbelag und einen zweiten Reibbelag aufweisen, zwischen denen die Antriebsseite oder die Abtriebsseite angeordnet ist.

Der Drehmomentbegrenzer wird insbesondere zusammen mit einem bekannten Torsionsdämpfer ausgeführt. Der Torsionsdämpfer dient der Dämpfung von Drehmomentschwankungen. Insbesondere ist der Torsionsdämpfer in einer radialen Richtung innerhalb des mindestens einen Reibbelags angeordnet.

Der mindestens eine Reibbelag, die Drehachse sowie die Antriebsseite und die Abtriebsseite sind insbesondere koaxial zueinander angeordnet.

Es wird weiter ein Antriebsstrang für ein Kraftfahrzeug vorgeschlagen, zumindest aufweisend eine erste Antriebseinheit (z. B. eine Verbrennungskraftmaschine) zur Bereitstellung eines ersten Antriebsdrehmoments und eine zweite Antriebseinheit (z. B. eine elektrische Maschine) zur Bereitstellung eines zweiten Antriebsdrehmoments, wobei die erste Antriebseinheit und die zweite Antriebseinheit über einen vorstehend beschriebenen Drehmomentbegrenzer drehmomentübertragend verbindbar bzw., bei Erreichen eines Grenzdrehmoments, voneinander trennbar sind.

Vorsorglich sei angemerkt, dass die hier verwendeten Zahlwörter ("erste", "zweite",...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1:: eine erste Ausführungsvariante eines Drehmomentbegrenzers in einem Antriebsstrang in einer Seitenansicht im Schnitt;
- Fig. 2:: eine zweite Ausführungsvariante eines Drehmomentbegrenzers in einer Seitenansicht im Schnitt; und
- Fig. 3:: ein Detail der Fig. 1.

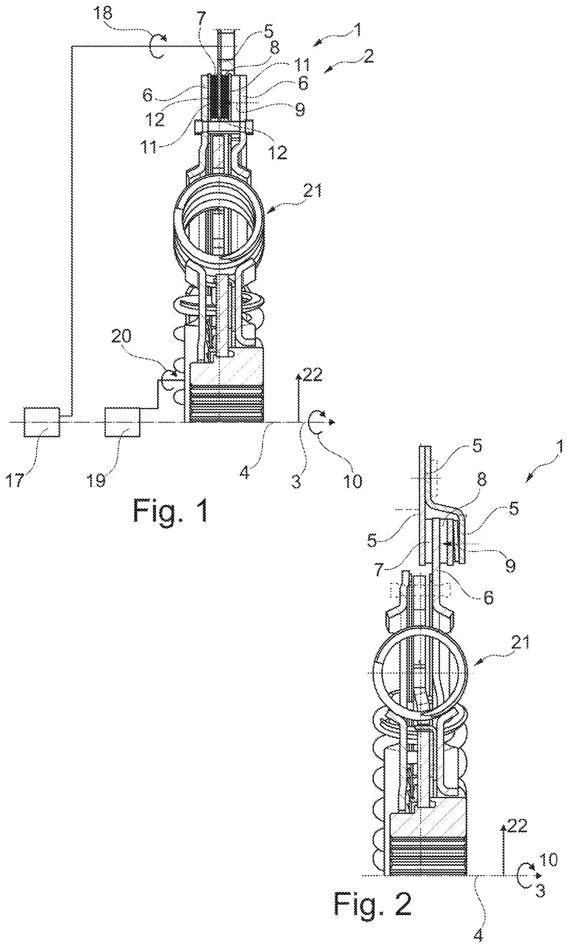

Fig. 1 zeigt eine erste Ausführungsvariante eines Drehmomentbegrenzers 1 in einem Antriebsstrang 2 in einer Seitenansicht im Schnitt. Der Antriebsstrang 2 weist eine erste Antriebseinheit 17 (z. B. eine Verbrennungskraftmaschine) zur Bereitstellung eines ersten Antriebsdrehmoments 18 und eine zweite Antriebseinheit 19 (z. B. eine elektrische Maschine) zur Bereitstellung eines zweiten Antriebsdrehmoments 20 auf. Das erste Antriebsdrehmoment 18 wirkt unmittelbar auf die Antriebsseite 5 des Drehmomentbegrenzers 1. Das zweite Antriebsdrehmoment 20 wirkt unmittelbar auf die Abtriebsseite 6 des Drehmomentbegrenzers. Die Abtriebsseite 6 kann weiter mit einem Getriebe (hier nicht dargestellt) drehmomentübertragend verbunden sein. Ein Torsionsdämpfer 21 ist an der Abtriebsseite 6 und in einer radialen Richtung 22 innerhalb der Reibbeläge 7, 8 angeordnet. Die erste Antriebseinheit 17 und die zweite Antriebseinheit 19 sind über den Drehmomentbegrenzer 1 drehmomentübertragend verbindbar bzw., bei Erreichen eines Grenzdrehmoments, voneinander trennbar.

Der Drehmomentbegrenzer 1 weist eine sich entlang einer axialen Richtung 3 erstreckende Drehachse 4 sowie eine Antriebsseite 5 und eine Abtriebsseite 6 auf, die über zwei Reibbeläge 7, 8 und unter einer in der axialen Richtung 3 wirkenden Vorspannung 9 zumindest bis zum Erreichen eines in einer Umfangsrichtung 10 wirkenden Grenzdrehmoments miteinander drehmomentübertragend verbunden sind. Zwischen dem ersten Reibbelag 7 und dem zweiten Reibbelag 8 ist die Antriebsseite 5 angeordnet. Die Abtriebsseite 6 umfasst hier zwei Bleche, zwischen denen die Reibbeläge 7, 8 und die Antriebsseite 5 angeordnet sind. Zwischen einem Blech der Abtriebsseite 6 und einem Reibbelag 7, 8 (hier dem zweiten Reibbelag 8) ist eine Vorspannfeder angeordnet, die die zur kraftschlüssigen Verbindung erforderliche Vorspannung 9 erzeugt.

Die Reibbeläge 7, 8 sind im Betrieb des Antriebsstrangs 2 bei Überschreiten des Grenzdrehmoments an einer, nur an einer von Antriebsseite 5 und Abtriebsseite 6 vorliegenden, ersten Reibfläche 11 rutschend angeordnet und dabei mit einer, an der anderen von Antriebsseite 5 und Abtriebsseite 6 vorliegenden zweiten Reibfläche 12 kraftschlüssig verbunden.

Die Reibbeläge 7, 8, die Drehachse 3 sowie die Antriebsseite 5 und die Abtriebsseite 6 sind koaxial zueinander angeordnet.

Fig. 2 zeigt eine zweite Ausführungsvariante eines Drehmomentbegrenzers 1 in einer Seitenansicht im Schnitt. Auf die Ausführungen zu Fig. 1 wird verwiesen. Im Unterschied zur ersten Ausführungsvariante ist bei der zweiten Ausführungsvariante zwischen dem ersten Reibbelag 7 und dem zweiten Reibbelag 8 die Abtriebsseite 6 angeordnet. Die Antriebsseite 5 umfasst hier zwei Bleche, zwischen denen die Reibbeläge 7, 8 und die Abtriebsseite 6 angeordnet sind. Zwischen einem Blech der Antriebsseite 5 und einem Reibbelag 7, 8 (hier dem zweiten Reibbelag 8) ist eine Vorspannfeder angeordnet, die die zur kraftschlüssigen Verbindung erforderliche Vorspannung 9 erzeugt.

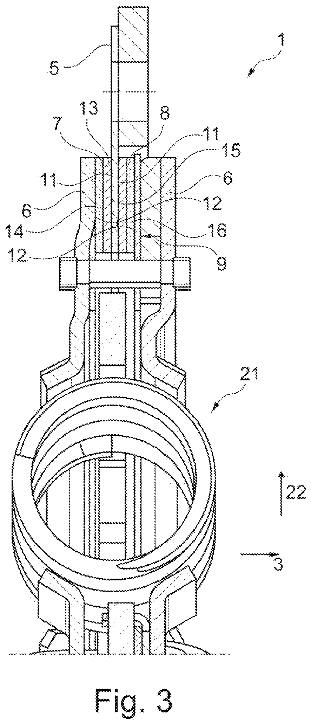

Fig. 3 zeigt ein Detail der Fig. 1. Auf die Ausführungen zu Fig. 1 wird verwiesen. Die Reibbeläge 7, 8 sind bei Überschreiten des Grenzdrehmoments an der ersten Reibfläche 11 (diese ist hier an der Antriebsseite 5 angeordnet) rutschend angeordnet. Dabei sind die Reibbeläge 7, 8 mit der zweiten Reibfläche 12 (hier an der Abtriebsseite 6 angeordnet) weiterhin kraftschlüssig verbunden. Die Reibbeläge 7, 8 weisen dafür hin zu der ersten Reibfläche 11 ein erstes Material 13 mit einem ersten Reibwert und hin zu der zweiten Reibfläche 12 ein zweites Material 14 mit einem von dem ersten Reibwert unterschiedlichen zweiten Reibwert auf.

Die Ausgestaltung jedes Reibbelags 7, 8 mit unterschiedlichen Reibwerten ermöglicht das vorbestimmte Durchrutschen an einer (vorbestimmten) Reibfläche 11 (nämlich immer an der ersten Reibfläche 11), während die andere zweite Reibfläche 12 weiter kraftschlüssig mit dem jeweiligen Reibbelag 7, 8 verbunden ist.

Die Reibbeläge 7, 8 sind hier als sogenannte Dual-Layer ausgeführt und werden durch zwei miteinander stoffschlüssig verbundene Lagen 15, 16 gebildet. Die erste Lage 15 bildet die erste Reibfläche 11 und die zweite Lage 16 die zweite Reibfläche 12.

Jeder Reibbelag 7, 8 bildet bis zum Erreichen des Grenzdrehmoments mit der Antriebsseite 5 und mit der Abtriebsseite 6 zumindest gegenüber der Umfangsrichtung 10 eine ausschließlich kraftschlüssige Verbindung aus. Es sind hier also gerade keine in Umfangsrichtung 10 wirkende stoffschlüssige (z. B. durch Kleben) oder formschlüssige (z. B. durch ineinandergreifende Profilierungen oder Nieten) Verbindungen vorgesehen.

## Patentansprüche

1. Drehmomentbegrenzer (1) für einen Antriebsstrang (2), zumindest aufweisend eine sich entlang einer axialen Richtung (3) erstreckende Drehachse (4) sowie eine Antriebsseite (5) und eine Abtriebsseite (6), die über mindestens einen Reibbelag (7, 8) und unter einer in der axialen Richtung (3) wirkenden Vorspannung (9) zumindest bis zum Erreichen eines in einer Umfangsrichtung (10) wirkenden Grenzdrehmoments miteinander drehmomentübertragend verbunden sind; wobei der mindestens eine Reibbelag (7, 8) bei Überschreiten des Grenzdrehmoments an einer, nur an einer von Antriebsseite (5) und Abtriebsseite (6) vorliegenden, ersten Reibfläche (11) rutschend angeordnet ist und dabei mit einer, an der anderen von Antriebsseite (5) und Abtriebsseite (6) vorliegenden zweiten Reibfläche (12) kraftschlüssig verbunden ist; wobei der mindestens eine Reibbelag (7, 8) zumindest hin zu der ersten Reibfläche (11) ein erstes Material (13) mit einem ersten Reibwert und hin zu der zweiten Reibfläche (12) ein zweites Material (14) mit einem von dem ersten Reibwert unterschiedlichen zweiten Reibwert aufweist, **dadurch gekennzeichnet, dass** der mindestens eine Reibbelag (7, 8) bis zum Erreichen des Grenzdrehmoments mit der Antriebsseite (5) und mit der Abtriebsseite (6) zumindest gegenüber der Umfangsrichtung (10) eine ausschließlich kraftschlüssige Verbindung ausbildet.

2. Drehmomentbegrenzer (1) nach Anspruch 1, wobei der erste Reibwert kleiner ist als der zweite Reibwert.

3. Drehmomentbegrenzer (1) nach Anspruch 2, wobei der erste Reibwert um mindestens 1 % kleiner ist als der zweite Reibwert.

4. Drehmomentbegrenzer (1) nach einem der vorhergehenden Ansprüche, wobei der mindestens eine Reibbelag (7, 8) ein Verbundmaterial ist, das durch mindestens das erste Material (13) und das zweite Material (14) gebildet ist.

5. Drehmomentbegrenzer (1) nach einem der vorhergehenden Ansprüche, wobei der mindestens eine Reibbelag (7, 8) mindestens zwei miteinander stoffschlüssig verbundene Lagen (15, 16) aufweist, wobei eine erste Lage (15) die erste Reibfläche (11) und eine zweite Lage (16) die zweite Reibfläche (12) bildet.

6. Drehmomentbegrenzer (1) nach einem der vorhergehenden Ansprüche, wobei der Drehmomentbegrenzer (1) zumindest einen ersten Reibbelag (7) und einen zweiten Reibbelag (8) aufweist, zwischen denen die Antriebsseite (5) oder die Abtriebsseite (6) angeordnet ist.

7. Antriebsstrang (2) für ein Kraftfahrzeug, zumindest aufweisend eine erste Antriebseinheit (17) zur Bereitstellung eines ersten Antriebsdrehmoments (18) und eine zweite Antriebseinheit (19) zur Bereitstellung eines zweiten Antriebsdrehmoments (20), wobei die erste Antriebseinheit (17) und die zweite Antriebseinheit (19) über einen Drehmomentbegrenzer (1) nach einem der vorhergehenden Ansprüche drehmomentübertragend verbindbar sind.

## Claims

1. A torque limiter (1) for a drive train (2), at least having an axis of rotation (4) extending along an axial direction (3), and a drive side (5) and an output side (6) which are connected in a torque-transmitting manner to one another via at least one friction lining (7, 8) and under a prestress (9) acting in the axial direction (3) at least until a limit torque acting in a peripheral direction (10) is reached; wherein, when the limit torque is exceeded, the at least one friction lining (7, 8) is slidingly arranged on a first friction surface (11) which is only on one of the drive side (5) or the output side (6), and is frictionally connected to a second friction surface (12) which is on the other of the drive side (5) or output side (6), wherein the at least one friction lining (7, 8) has a first material (13) with a first coefficient of friction at least towards the first friction surface (11) and a second material (14) with a second coefficient of friction different from the first coefficient of friction towards the second friction surface (12), **characterized in that** the at least one friction lining (7, 8) forms an exclusively frictional connection with the drive side (5) and with the output side (6) at least with respect to the peripheral direction (10) until the limit torque is reached.

2. The torque limiter (1) according to claim 1, wherein the first coefficient of friction is less than the second coefficient of friction.

3. The torque limiter (1) according to claim 2, wherein the first coefficient of friction is at least 1% less than the second coefficient of friction.

4. The torque limiter (1) according to one of the preceding claims, wherein the at least one friction lining (7, 8) is a composite material that is formed by at least the first material (13) and the second material (14).

5. The torque limiter (1) according to one of the preceding claims, wherein the at least one friction lining (7, 8) has at least two layers (15, 16) bonded to one another, wherein a first layer (15) forms the first friction surface (11) and a second layer (16) forms the second friction surface (12).

6. The torque limiter (1) according to one of the preceding claims, wherein the torque limiter (1) has at least a first friction lining (7) and a second friction lining (8), between which the drive side (5) or the output side (6) is arranged.

7. A drive train (2) for a motor vehicle, having at least a first drive unit (17) for providing a first drive torque (18) and a second drive unit (19) for providing a second drive torque (20), wherein the first drive unit (17) and the second drive unit (19) can be connected in a torque-transmitting manner via a torque limiter (1) according to one of the preceding claims.

## Revendications

1. Limiteur de couple (1) pour une chaîne cinématique (2), présentant au moins un axe de rotation (4) s'étendant dans une direction axiale (3), ainsi qu'un côté entrée (5) et un côté sortie (6), lesquels sont reliés l'un à l'autre par l'intermédiaire d'au moins une garniture de friction (7, 8) et sous l'action d'une précontrainte (9) agissant dans la direction axiale (3), au moins jusqu'à ce qu'un couple limite agissant dans la direction circonférentielle (10) soit atteint ; dans lequel l'au moins une garniture de friction (7, 8) est disposée pour glisser sur une première surface de friction (11) présente uniquement sur un côté parmi le côté entrée (5) et le côté sortie (6) lorsque le couple limite est dépassé et est liée par complémentarité de force à une seconde surface de friction (12) présente sur l'autre côté parmi le côté entrée (5) et le côté sortie (6), dans lequel l'au moins une garniture de friction (7, 8) comporte, au moins dans la direction de la première surface de friction (11), une première matière (13) présentant un premier coefficient de friction et, dans la direction de la seconde surface de friction (12), une seconde matière (14) présentant un second coefficient de friction différent du premier coefficient de friction, **caractérisé en ce que** l'au moins une garniture de friction (7, 8) forme une liaison exclusivement par complémentarité de force avec le côté entrée (5) et avec le côté sortie (6) au moins par rapport à la direction circonférentielle (10) jusqu'à ce que le couple limite soit atteint.

2. Limiteur de couple (1) selon la revendication 1, dans lequel le premier coefficient de friction est inférieur au second coefficient de friction.

3. Limiteur de couple (1) selon la revendication 2, dans lequel le premier coefficient de friction est au moins 1 % inférieur au second coefficient de friction.

4. Limiteur de couple (1) selon l'une quelconque des revendications précédentes, dans lequel l'au moins une garniture de friction (7, 8) est une matière composite, laquelle est formée par au moins la première matière (13) et la seconde matière (14).

5. Limiteur de couple (1) selon l'une quelconque des revendications précédentes, dans lequel l'au moins une garniture de friction (7, 8) comporte au moins deux couches (15, 16) liées l'une à l'autre par complémentarité de matière, dans lequel une première couche (15) forme la première surface de friction (11) et une seconde couche (16) forme la seconde surface de friction (12).

6. Limiteur de couple (1) selon l'une quelconque des revendications précédentes, dans lequel le limiteur de couple (1) comporte au moins une première garniture de friction (7) et une seconde garniture de friction (8) entre lesquelles le côté entrée (5) ou le côté sortie (6) est agencé.

7. Chaîne cinématique (2) pour un véhicule à moteur, comportant au moins une première unité d'entraînement (17) destinée à la fourniture d'un premier couple d'entraînement (18) et d'une seconde unité d'entraînement (19) destinée à la fourniture d'un second couple d'entraînement (20), dans laquelle la première unité d'entraînement (17) et la seconde unité d'entraînement (19) peuvent être liées par transmission de couple par l'intermédiaire d'un limiteur de couple (1) selon l'une quelconque des revendications précédentes.
